# FASCICULE DE BREVET EUROPEEN

(11) **EP 1 116 691 B1**
(45) Date de publication et mention de la délivrance du brevet: **10.11.2004**
(21) Numéro de dépôt: 00403498.9
(22) Date de dépôt: 13.12.2000
(51) Int. Cl.: C01B 39/22

(54) **Zéolites X échangées notamment au lithium, leur procédé de preparation et leur utilisation comme adsorbants de l'azote dans la séparation des gaz de l'air**
Lithium ausgetauschten Zeolithen ,Verfahren zu ihrer Herstellung und ihre Verwendung als Absorptionsmittel für Stickstoff bei der Luftzerlegung
Lithium exchanged zeolites, process for their preparation and their use as nitrogen adsorbent in air separation

(30) Priorité: 04.01.2000 FR 0000039
(43) Date de publication de la demande: 18.07.2001
(73) Titulaire: CECA S.A., 92800 Puteaux (Hauts de Seine) (FR)
(72) Inventeur: Plee, Dominique, 64140 Lons (FR); Masini, Jean-Jacques, 78170 La Celle Saint-Cloud (FR)
(74) Mandataire: Treuil, Claude

(56) Documents cités:
- EP-A- 0 850 877
- EP-A- 0 863 109
- US-A- 5 932 509

## Description

L'invention concerne les zéolites de type X, leur préparation, et leur utilisation dans la séparation de mélanges gazeux, et plus particulièrement les zéolites de type X échangées au lithium et aux ions trivalents et/ou divalents, sélectives pour l'azote, ayant une stabilité thermique et une cristallinité améliorées, leur préparation et leur utilisation dans la séparation de l'azote d'avec des gaz moins fortement adsorbés.

La séparation de l'azote d'avec d'autres gaz, comme par exemple l'oxygène, l'argon et l'hydrogène, est d'une importance industrielle considérable. Lorsque la séparation est effectuée sur une grande échelle, la distillation fractionnée est souvent utilisée. La distillation est toutefois très onéreuse du fait du coût de l'immobilisation initiale importante pour l'équipement et de la demande considérable en énergie qu'elle implique. D'autres méthodes de séparation ont récemment été étudiées dans des efforts pour réduire le coût global de ces séparations.

Une alternative à la distillation qui a ainsi été utilisée pour séparer l'azote d'avec d'autres gaz est l'adsorption. Par exemple, une zéolite X au sodium, décrite dans US 2.882.244 a été utilisée avec un certain succès pour la séparation par adsorption d'azote d'avec l'oxygène. Un inconvénient de l'utilisation de la zéolite X au sodium pour la séparation de l'azote d'avec l'oxygène est qu'elle n'a qu'un faible rendement séparatif dans la séparation de l'azote.

Selon US 3.140.933, on obtient une amélioration dans l'adsorption de l'azote lorsque certains des ions de base sont remplacés par des ions lithium. Ce brevet énonce que la zéolite de type X ayant des ions de base remplacés par des ions lithium peut être efficacement utilisée pour séparer l'azote de l'oxygène à des températures allant jusqu'à 30°C. Du fait que l'échange d'ions n'est pas total et que les zéolites X ont été synthétisées en milieu sodique, l'adsorbant utilisé est une zéolite mixte sodium/lithium.

US 4.859.217 décrit qu'une très bonne séparation de l'azote d'avec l'oxygène peut être obtenue par adsorption à des températures de 15 à 70 °C en utilisant une zéolite de type X qui possède plus de 88% de ses ions sous forme d'ions lithium, en particulier lorsque est utilisée une zéolite de rapport atomique silicium/aluminium compris entre 1 et 1,25.

Malheureusement, la zéolite de type X fortement échangée au lithium possède une très forte affinité pour l'eau, et la présence de l'eau adsorbée, même en petites quantités, diminue sérieusement la capacité d'adsorption de la zéolite. En conséquence, pour s'assurer d'une performance optimale en matière d'adsorption, il est nécessaire d'activer la zéolite en la chauffant à des températures allant jusqu'à 600 à 700 °C pour chasser autant d'eau adsorbée que possible. Du fait que les zéolites de type X échangées au lithium ne sont pas stables à des températures supérieures à 740 °C environ, l'activation de ces adsorbants doit être soigneusement contrôlée pour empêcher leur détérioration. Un autre inconvénient des zéolites de type X fortement échangées au lithium tient au fait qu'elles ont un coût de production élevé dû au prix des composés de lithium nécessaires à leur fabrication.

II existe donc un besoin en adsorbants qui aient une bonne stabilité thermique ainsi qu'une bonne cristallinité et des propriétés adsorbantes pour l'azote au moins égales à celles des zéolites fortement échangées au lithium mais qui puissent être produits à des coûts plus raisonnables.

US 5.179.979 affirme que les zéolites de type X lithium/métaux alcalino-terreux ayant des rapports molaires lithium/métaux alcalino-terreux de l'ordre de 95/5 à 50/50 environ ont une stabilité thermique supérieure à celle des zéolites au lithium pur correspondantes et de bonnes sélectivités et capacités d'adsorption.

US 5.152.813 décrit l'adsorption d'azote à partir de mélanges gazeux qui utilise des zéolites X cristallines ayant un rapport zéolitique Si/Al ≤ 1,5 et dont les sites échangeables sont occupés par au moins 2 ions : entre 5 et 95% d'ion lithium et entre 5 et 95% d'un second ion choisi parmi calcium, strontium et des mélanges de ceux-ci, le total (lithium et second ion échangeable) étant d'au moins 60%.

US 5.464.467 ou EP 667.183 proposent une zéolite de type X dont les cations comprennent, rapportés en équivalents, d'environ 50 à environ 95% de lithium, d'environ 4 à environ 50% d'ions trivalents choisis parmi aluminium, scandium, gallium, fer (III), chrome (III), indium, yttrium, lanthanides seuls, mélanges de deux lanthanides ou plus, et mélanges de ceux-ci, et de 0 à environ 15% d'ions résiduels choisis parmi sodium, potassium, ammonium, hydronium, calcium, strontium, magnésium, baryum, zinc, cuivre (II) et mélanges de ceux-ci qui est préparée par échange des cations échangeables de la zéolite préalablement agglomérée avec un liant, d'abord par du lithium puis par le ou les cations trivalents.

US 5.932.509 propose de préparer ces mêmes zéolites selon un procédé consistant d'abord à échanger les cations échangeables de la zéolite X en poudre par des cations trivalents, puis à agglomérer avec un liant et enfin à procéder à l'échange lithium sur la zéolite agglomérée.

Mais la demanderesse a constaté que les zéolites préparées selon l'enseignement de US 5.179.979, US 5.152.813, US 5.464.467 ou US 5.932.509, quoique présentant une bonne stabilité thermique et une bonne capacité d'adsorption de l'azote, ont une cristallinité insuffisante et présentent une certaine hétérogénéité de répartition des cations tri- et/ou divalents.

La présente invention propose des zéolites de type X ayant un rapport atomique Si/Al inférieur à 1,5 et de préférence compris entre 0,9 et 1,1 dont les cations échangeables comprennent rapportés en équivalents
* d'environ 50 à environ 95% d'ions lithium,
* d'environ 4 à environ 50% d'ions trivalents choisis parmi l'aluminium, le scandium, le gallium, le fer (III), le chrome (III), l'indium, l'yttrium, les lanthanides ou terres rares, seuls ou en mélange et/ou d'ions divalents choisis parmi le calcium, le strontium, le zinc, le cuivre, le chrome (II), le fer (II), le manganèse, le nickel, le cobalt, seuls ou en mélange,
* 0 à environ 15% d'ions résiduels choisis parmi le sodium, le potassium, l'ammonium, l'hydronium, seuls ou en mélange, et susceptibles d'être obtenus selon un procédé qui comprend les étapes suivantes :
   a) mise en suspension de la zéolite dans l'eau, puis
   b) échange des cations échangeables de la zéolite en suspension avec un ou plusieurs ions di- et/ou trivalents par contact(s) simultané(s) et/ou successif(s) dans un mélangeur rapide de ladite suspension avec une ou plusieurs solutions contenant des composés des ions di- et/ou trivalents,
   c) échange des cations échangeables de la zéolite issue de l'étape b) avec du lithium,
étapes qui seront détaillées ci-dessous.

Les zéolites de la présente invention peuvent se présenter sous diverses formes et la forme exacte qu'elles revêtent peut déterminer leur utilité dans les procédés industriels d'adsorption. Lorsque les zéolites de la présente invention sont utilisées dans des adsorbeurs industriels, il peut être préféré d'agglomérer (par exemple transformer en granulés) la zéolite pour ne pas risquer, dans une colonne d'adsorption de taille industrielle, un compactage de la zéolite pulvérulente, bloquant ainsi, ou tout au moins réduisant considérablement le flux à travers la colonne. Ces techniques impliquent habituellement le mélange de la zéolite avec un liant, qui est usuellement une argile, transformant le mélange en un agglomérat, par exemple par extrusion ou formation billes, et le chauffage du mélange zéolite/liant formé à une température de 600-700°C environ pour convertir l'agglomérat « vert » en un agglomérat qui est résistant à l'écrasement. Les liants utilisés pour agglomérer les zéolites peuvent inclure les argiles, les silices, les alumines, les oxydes métalliques et leurs mélanges.

Il est possible de préparer des agglomérats contenant moins de 10 %, voire même moins de 5 %, en poids de liant résiduel. Un procédé d'obtention de ces agglomérats à faible taux de liant consiste à convertir le liant des agglomérats décrits ci-dessus en phase zéolitique. Pour cela, on commence par agglomérer une poudre de zéolite LSX avec un liant zéolitisable (par exemple kaolin ou métakaolin), puis on zéolitise par macération alcaline par exemple selon le procédé décrit dans EP 932.581, puis on échange au sodium sur granulé zéolitisé. On peut ainsi aisément obtenir selon l'invention des agglomérés titrant au moins 90 %, voire même au moins 95%, de zéolite LSX remarquablement performants.

En outre, les zéolites peuvent être agglomérées avec des matériaux tels que silice-alumine, silice-magnésie, silice-zircone, silice-thorine, silice-oxyde de béryllium et silice-dioxyde de titane, ainsi qu'avec des compositions ternaires telles que silice-alumine-thorine, silice-alumine-zircone et des argiles présents comme liants. Les proportions relatives des matériaux et des zéolites susmentionnés peuvent varier largement. Lorsque la zéolite doit être transformée en agglomérats avant usage, ces agglomérats ont avantageusement un diamètre d'environ 0,5 à environ 5 mm.

Le liant d'agglomération représente en général de 5 à 30 parties en poids pour 100 parties d'aggloméré.

Un second objet de l'invention concerne un procédé de préparation des zéolites définies précédemment.

Les zéolites de l'invention sont généralement préparées à partir d'une zéolite de type X de base qui possède habituellement d'origine des ions sodium et/ou potassium comme cations compensateurs de charge, c'est-à-dire des ions qui compensent la charge négative du réseau alumino-silicate.

On procède à l'échange des cations échangeables de la zéolite de départ avec une solution des composés des ions trivalents et/ou des ions divalents (étape b)) en pompant simultanément la suspension de zéolite à échanger, préalablement mise en suspension dans de l'eau (étape a)) et la solution des composés en les forçant à traverser un mélangeur rapide, susceptible d'assurer un mélange homogène de la suspension et de la solution après un faible temps de contact entre la suspension et la solution (quelques minutes), qui est de préférence un mélangeur statique, susceptible d'assurer un mélange homogène après un très faible temps de contact (quelques secondes), toutes dispositions étant prises pour que les débits soient ajustés de façon à conserver un rapport poids de suspension / poids de solution pratiquement constant. Le recours à l'échange en mélangeur statique n'a pas d'effet quant au taux d'échange, qui reste le taux quantitatif auquel on parvient par échange classique. On obtient une meilleure répartition statistique des ions di- et/ou trivalents au sein de la structure zéolitique, ce qui se traduit par un niveau final de capacité d'adsorption d'azote significativement amélioré, ce qui est tout à fait inattendu.

Il est préférable, bien que cela ne soit pas absolument nécessaire, d'utiliser des solutions aqueuses des ions d'échange. Tout composé hydrosoluble des ions échangeurs peut être utilisé. Les composés hydrosolubles préférés des ions sont les sels, et en particulier les chlorures, les sulfates et les nitrates. Les sels particulièrement préférés sont les chlorures du fait de leurs solubilités élevées et de leur grande disponibilité.

Lorsqu'on désire préparer une zéolite selon l'invention dont une partie des sites cationiques est occupée par plusieurs types d'ions divalents et/ou trivalents définis plus haut, il est possible de procéder soit simultanément à l'échange de tous les cations, par contact avec une solution contenant tous ces cations, soit par échange successif de chaque cation, soit par une solution intermédiaire entre les 2 solutions précédentes.

Une variante préférée de l'invention consiste à échanger le ou les cations échangeables avec des ions tri- et/ou divalents et avec des ions monovalents, et de préférence l'ion sodium.

Une autre variante préférée consiste à stabiliser à la soude la zéolite juste après l'échange par des ions tri- et/ou divalents, ou bien après l'échange par des ions tri- et/ou divalents et des ions monovalents.

Lorsque les zéolites selon l'invention se présentent sous forme agglomérée, forme particulièrement préférée, l'étape d'agglomération est mise en oeuvre après l'échange d'une partie des cations échangeables de la zéolite par des cations tri- et/ou divalents, éventuellement en présence d'un cation monovalent.

Il s'avère particulièrement avantageux de convertir tous les cations échangeables de la zéolite de départ en une espèce cationique monovalente unique, de préférence la forme ion sodium ou ammonium, préalablement à l'échange avec les cations di- et/ou trivalents tels que détaillé ci-dessus. Pour cela, la zéolite est mise en contact avec une solution contenant des ions monovalents, tels que sodium ou ammonium, par exemple une solution aqueuse de NaCl ou de NH₄Cl.

Une fois échangée avec des ions di- et/ou trivalents, la zéolite peut aussi être avantageusement mise en contact, avant ou après l'éventuelle étape d'agglomération, avec une solution contenant des ions sodium ou ammonium, par exemple une solution aqueuse de NaCl ou de NH₄Cl.

L'étape suivante du procédé selon l'invention (étape c)) consiste à échanger une partie des cations échangeables par des ions lithium par contact avec une solution de composé de lithium, de préférence une solution aqueuse de sel de lithium, tel que LiCl. De manière connue pour l'homme du métier après chaque étape d'échange ionique, la zéolite est lavée à l'eau, puis séchée à une température en général comprise entre 40 et 200 °C.

De manière préférée à pression atmosphérique, la température de la solution de composés de lithium est comprise entre 80 et 115 °C, et notamment entre 95 et 115 °C. Des températures plus élevées peuvent être utilisées, moyennant une mis en pression du système.

La concentration en lithium de la solution, limitée par la solubilité des sels, est choisie aussi élevée que possible afin de réduire les dépenses liées au retraitement.

Une variante particulièrement avantageuse consiste à procéder de façon continue à contre-courant selon le mode opératoire de EP 863.109 détaillé ci-dessous :

La zéolite est répartie dans au moins 2 récipients sous forme de lit fixe, de préférence au moins 3, agencés en série de manière interchangeable, la solution de composés de lithium est acheminée à travers lesdits récipients agencés en série et la succession des récipients agencés en série, dénommée « carrousel », est modifiée de manière cyclique à des intervalles de temps donnés, l'arrivée de la nouvelle solution étant transposée à chaque fois du 1^{er} récipient où se trouve la zéolite la plus échangée au lithium au récipient qui le suit dans la série ; lorsque le taux d'échange en lithium souhaité est atteint pour la zéolite du 1^{er} récipient, celui-ci est dissocié de la série de récipients du carrousel et la zéolite qui y est contenue est débarrassée de la solution de composés lithium par lavage puis déchargée et éventuellement remplacée par une nouvelle charge de zéolite à échanger.

La durée de cycle d'un intervalle de temps s'élève typiquement à au moins 15 minutes et de préférence à au moins 1 heure.

Selon un troisième objet de l'invention, les zéolites selon l'invention sont utilisées comme adsorbant de l'azote contenu dans un mélange gazeux, notamment l'air, et permettent ainsi de séparer l'azote des autres gaz contenus dans le mélange gazeux. La séparation est réalisée en faisant passer le mélange gazeux dans au moins une zone d'adsorption contenant l'adsorbant selon l'invention.

Dans un mode de réalisation préféré, le procédé d'adsorption est cyclique et comprend l'étape d'adsorption décrite ci-dessus ainsi qu'une étape de désorption de l'azote de la (les) zone(s) d'adsorption.

Les procédés cycliques préférés englobent l'adsorption par variation de pression (PSA mis pour Pressure Swing Adsorption ou VSA mis pour Vacuum Swing Adsorption (cas particulier de désorption sous vide)), par variation de température (TSA mis pour Temperature Swing Adsorption), et des combinaisons de celles-ci (PTSA).

Selon certains modes de réalisation préférés, l'étape d'adsorption est effectuée à une température comprise entre environ -20 et environ 50 °C et à une pression absolue comprise entre environ 0,08 et 1 MPa.

Dans un mode de réalisation très préféré de l'invention, le procédé d'adsorption est utilisé pour séparer l'azote d'un mélange gazeux comprenant de l'azote et un ou plusieurs autres gaz choisis parmi oxygène, argon, hélium, néon et hydrogène.

Dans d'autres modes de réalisation préférés de l'invention, l'étape de régénération de la zone d'adsorption est réalisée par des moyens de vide (aspiration), par purge de la zone d'adsorption avec un ou plusieurs gaz inerte(s) et/ou avec une partie du flux gazeux en sortie de la zone d'adsorption, par variation de température ou par combinaison de ces régénérations par aspiration, purge et/ou variation de température ; en général la remise en pression du lit est au moins partiellement effectuée en utilisant le gaz non adsorbé du système d'adsorption.

La température à laquelle l'étape d'adsorption du procédé d'adsorption est effectuée dépend d'un certain nombre de facteurs tels que les gaz spécifiques à séparer, l'adsorbant spécifique utilisé et la pression à laquelle l'adsorption est effectuée. En général, l'étape d'adsorption est effectuée à une température d'au moins -20°C environ, et de manière avantageuse à une température d'au moins 15°C environ. L'adsorption est généralement effectuée à des températures qui ne sont pas supérieures à 70 °C environ, et de manière préférée à des températures qui ne sont pas supérieures à 50 °C et de manière encore plus préférentielle à des températures qui ne dépassent pas environ 35 °C.

L'étape d'adsorption du procédé d'adsorption selon l'invention peut être réalisée à n'importe laquelle des pressions habituelles et bien connues, utilisées dans les procédés d'adsorption de type TSA, PSA ou VSA. Typiquement, la pression absolue minimale à laquelle l'étape d'adsorption est effectuée est généralement au moins égale à la pression atmosphérique. La pression absolue maximale à laquelle l'étape d'adsorption est effectuée ne dépasse généralement pas 1,5 MPa environ, et de préférence 1 MPa environ et avantageusement 0,4 MPa environ.

Lorsque le procédé d'adsorption est l'adsorption par variation de pression, l'adsorbant est généralement régénéré à une pression comprise entre 10 et 500 kPa, de préférence de 20 à 200 kPa environ, inférieure à la pression d'adsorption et lorsqu'il s'agit de l'adsorption par variation de température, il est généralement régénéré à une température comprise entre 0 et 300 °C environ, supérieure à la température d'adsorption.

Lorsque le procédé d'adsorption est de type TSA, la température du(des) lit(s) est donc augmentée pendant l'étape de régénération par rapport à la température d'adsorption. La température de régénération peut être toute température en dessous de celle à laquelle l'adsorbant commence à se dégrader. En général, la température de l'adsorbant est habituellement augmentée jusqu'à une valeur comprise entre environ 0 et environ 300 °C, et de préférence entre environ 25 et environ 250 °C, et de manière avantageuse entre environ 50 et 180 °C. La procédure de régénération peut être une combinaison de PSA ou VSA et de TSA, auquel cas à la fois la température et la pression utilisées pendant la régénération varieront dans les gammes indiquées ci-dessus.

Les exemples qui suivent feront mieux comprendre l'invention.

### Exemple 1 (comparatif selon EP 667.183 (BOC))

Dans une cuve équipée d'une hélice d'agitation, on introduit 1.000 litres d'eau industrielle adoucie. Sous agitation (100 trs/min et vitesse périphérique = 3,5 m/s), on ajoute 200 kg de zéolite LSX en poudre (quantité comptée en produit anhydre) de rapport atomique Si/Al égal à 1 et dont les sites cationiques échangeables sont occupés à 77 % par du sodium et à 23 % par du potassium et de volume microporeux égal à 0,262 cm³/g (mesuré par adsorption de toluène à 25°C sous une pression relative de 0,5) et de volume de Dubinin égal à 0,325 cm³/g. On introduit ensuite, en une dizaine de minutes 45 kg de solution de chlorures de terres rares industrielles commercialisée par la société Rhodia sous la dénomination LADI (solution aqueuse contenant des chlorures de lanthane et de praséodyme à des concentrations exprimées en La₂O₃ et Pr₂O₃ de respectivement 16,6 et 7,2 % en poids, le reste étant majoritairement constitué d'eau et de traces de chlorures d'autres terres-rares (Ce, Nd)) On réduit l'agitation à 20 trs/min et on maintient le réacteur dans ces conditions environ une heure, durée au bout de laquelle on constate que le mélange est enfin homogène, après quoi on filtre, lave et sèche la poudre ainsi obtenue.

On procède ensuite à l'agglomération de la poudre à l'aide d'un liant argileux au taux de 17% en poids (comptés par rapport à l'aggloméré). On met en forme sous forme de billes de 1,6-2,5 mm de diamètre. Ces billes sont séchées à 80°C, puis activées selon la technologie LTC (mis pour lit traversé) décrite par exemple dans EP 421.875, à 580°C, sous air sec et décarbonaté.

On procède alors à l'échange au lithium, qui consiste à soumettre les billes précédentes à l'action d'une solution aqueuse de chlorure de lithium 4M à 110°C, le rapport volumique solution / masse des billes étant de 10. Cet échange est exécuté 6 fois, ce qui assure l'élimination pratiquement totale des ions sodium et potassium initialement présents dans la structure de la zéolite LSX. Le produit résultant est séché à 60°C, puis activé selon la technologie LTC à une température de 580°C, sous air sec et décarbonaté.

L'analyse des ions du produit, exprimée en pourcentage de la capacité d'échange de la zéolite LSX initiale s'établit ainsi:

| | |
|---|---|
| équivalents terres rares | 14 % |
| équivalents sodium + potassium | 1 % |
| équivalents lithium | 85 % |

### Exemple 2

Dans une cuve équipée d'une hélice d'agitation, on introduit 1.000 litres d'eau industrielle adoucie. Sous agitation (100 trs/min et vitesse périphérique = 3,5 m/s), on ajoute 200 kg de la zéolite LSX en poudre dont les caractéristiques sont indiquées à l'exemple 1. Dans une seconde cuve, on mesure 45 kg de solution de chlorures de terres rares industrielles LADI.

On pompe alors simultanément la suspension de zéolite LSX et la solution de chlorures de terres rares en les forçant à traverser un même mélangeur statique. Les débits sont ajustés de façon à conserver constamment un rapport poids de suspension / poids de solution égal à 1.200/45. Le mélange sortant du mélangeur statique est conservé dans une troisième cuve sous légère agitation pendant une heure, après quoi le solide est filtré, lavé et séché.

Ce solide est soumis aux mêmes actions d'agglomération, d'activation intermédiaire, d'échange lithium et d'activation finale que dans l'exemple 1. L'analyse des ions dans la structure échangée conduit aux mêmes résultats que dans l'exemple 1.

### Exemple 3

Les adsorbants à base de zéolite terres-rares/lithium préparés aux exemples 1 et 2 sont testés quant à leurs capacités d'adsorption d'azote (C_{N2}) à 25°C et sous pression de 100 kPa, après conditionnement par dégazage sous vide de 10⁻³ mm de mercure à 300°C pendant 3 heures. Le volume de Dubinin de ces adsorbants est également mesuré

On obtient les résultats suivants :

| Type d'adsorbant | C_{N2} sous 100 kPa à 25°C (cm³/g) | Volume de Dubinin |
|---|---|---|
| selon exemple 1 (comparatif) | 20,5 | 0,28 |
| selon exemple 2 | 21,2 | 0,29 |

On déduit de ces résultats que l'adsorbant selon l'invention préparé à l'exemple 2 a un meilleur potentiel d'adsorption de l'azote que l'adsorbant préparé à l'exemple 1 selon l'enseignement de EP 667.183 car il présente une répartition plus homogène de la charge en terres rares qui se traduit sur les propriétés d'adsorption du produit final.

Les exemples 4 à 7 suivants ont été réalisés à l'échelle du laboratoire en introduisant la solution de chlorures de terres-rares au goutte à goutte dans la suspension de zéolite : ceci correspond à une dispersion immédiate telle qu'obtenue à l'échelle industrielle avec un mélangeur statique.

### Exemple 4

On introduit 20 g de zéolite LSX en poudre telle que définie à l'exemple 1 dans 200 g d'eau sous agitation. Après homogénéisation de la suspension, on ajoute au goutte à goutte en 20 minutes 34,5 g de solution de chlorures de terres rares diluée dans l'eau constituée de 30 ml d'eau et de 4,5 g de solution de chlorures de terres-rares LADI. Après addition complète, on arrête l'agitation et on maintient le mélange réactionnel 2 heures à température ambiante puis on filtre, lave et sèche à température ambiante le gâteau ainsi obtenu ; cette méthode est appelée voie 1.

Selon une deuxième méthode appelée voie 2, on remplace les 30 ml d'eau de la solution de chlorures de terres-rares diluée dans l'eau ci-dessus par 30 ml d'une solution aqueuse de NaCl 2M, ce qui conduit à une concentration globale en Na du mélange réactionnel de l'ordre de 0,35 M. On effectue ici un échange en compétition entre les cations de terres-rares et les cations sodium présents.

On analyse chimiquement les poudres de zéolite obtenues par les voies 1 et 2, à la fois par analyse chimique classique et par spectroscopie XPS (spectroscopie photoélectronique de rayons X), qui permet de n'atteindre que la surface de l'échantillon sur une épaisseur de l'ordre de quelques dizaines d'Å ; on peut ainsi s'assurer si la surface est proche de la composition globale.

Les résultats sont les suivants:

| | | Voie 1 | Voie2 |
|---|---|---|---|
| Analyse chimique globale | Taux d'échange terres-rares (%) | 14,8 | 13,2 |
| | Taux d'échange Na (%) | 58,6 | 68,6 |
| | Taux d'échange K (%) | 19,8 | 14,9 |
| | Compensation cationique (%) | 93 | 97 |
| Analyse chimique par XPS | Taux d'échange terres-rares (%) | 86 | 59 |

Les inventeurs pensent que le bouclage cationique à 100% est assuré par des protons; ce qui impliquerait que la voie 1 fournirait un produit un peu plus acide que celui de la voie 2.

Au vu de ces résultats, on conclut que l'échange en compétition par NaCl (voie 2) permet d' :
- améliorer l'homogénéité de répartition des ions dans la zéolite
- diminuer la teneur résiduelle en potassium
- améliorer la compensation cationique.

Les inventeurs pensent que tous ces éléments militent en faveur d'une amélioration de la qualité de la poudre en vue d'une mise en forme et d'un échange ultérieurs.

### Exemple 5

20 grammes (comptés en équivalents anhydre) de poudre de LSX telle que définie à l'exemple 1 sont dispersés dans 118 ml d'eau sous légère agitation. A cette suspension, sont ajoutés 115 ml d'une solution aqueuse contenant également 5 g de solution de chlorures de terres rares LADI et 37 g de NaCl, ce qui conduit à une concentration globale en sodium de 2,7 M. On effectue donc ici un échange en compétition entre les terres rares et le sodium. Après addition complète de la solution, on arrête l'agitation et on maintient le mélange réactionnel 2 heures à température ambiante puis on filtre, lave et sèche à température ambiante le gâteau ainsi obtenu.

On analyse chimiquement la poudre de zéolite obtenue, à la fois par analyse chimique classique et par spectroscopie XPS ; les résultats sont les suivants:

| | | |
|---|---|---|
| Analyse chimique globale | Taux d'échange terres-rares (%) | 16 |
| | Taux d'échange K (%) | 4,5 |
| | Taux d'échange Na (%) | 79,5 |
| | Compensation cationique (%) | 100 |
| Analyse chimique par XPS | Taux d'échange terres-rares (%) | 47,5 |

Ces valeurs montrent donc bien, tout comme celles de l'exemple 4, que l'on parvient à assurer une meilleure répartition des terres rares par l'échange en compétition terres-rares/sodium. Parallèlement, la compensation cationique montre qu'il n'y a pas de protons retenus. Enfin, le taux d'échange en potassium diminue à des niveaux faibles.

On procède ensuite à l'agglomération de cette poudre à l'aide du même liant argileux que celui de l'exemple 1 en la mettant en forme sous forme de billes de 1,6 à 2,5 mm de diamètre. Ces billes sont séchées à 80 °C, puis activées selon la technologie LTC à 580°C. On effectue ensuite l'échange lithium qui consiste à soumettre les billes au même traitement que celui décrit dans l'exemple 1. Le produit résultant est séché à 60°C, puis activé selon la technologie LTC à 580 °C sous air sec et décarbonaté.

L'analyse des ions du produit, exprimée en pourcentage de la capacité d'échange de la zéolite LSX initiale s'établit ainsi :

| | |
|---|---|
| équivalent terres rares | 16 % |
| équivalent sodium et potassium | 1 % |
| équivalent lithium | 83 % |

L'adsorbant en question, est testé quant à sa capacité d'adsorption d'azote à 25 °C et sous pression de 100 kPa, après dégazage à 300 °C sous vide de 0,13 Pa pendant 3 heures. On obtient les résultats suivants:

| | |
|---|---|
| C _{N2} sous 100 kPa à 25 °C | 22,1 cm³/g |

On mesure le volume de Dubinin par exploitation de l'isotherme d'adsorption de N₂ à 77 °K, mesurée sur les échantillons dégazés ; on obtient un volume de Dubinin de 0,290 cm³/g.

Ces résultats confirment donc bien que les adsorbants préparés selon le procédé de l'invention préféré (échange en compétition cation di- ou trivalent/cation monovalent) présentent une capacité d'adsorption d'azote supérieure à celle de ceux pour lesquels l'échange terres-rares n'a pas eu lieu en présence d'ion sodium.

### Exemple 6

On effectue un échange d'une partie des cations échangeables Na⁺ et K⁺ de la zéolite LSX définie à l'exemple 1 par des cations de terres-rares en mélangeant à température ambiante pendant 2 heures une suspension de 10 g de zéolite et de 70 g d'eau avec 2,33 g d'une solution de chlorures de terres rares LADI pour atteindre un taux d'échange de 15% selon le procédé décrit à l'exemple 1. Après 1 h 45 de contact entre la suspension aqueuse de zéolite et la solution de chlorures de terres-rares, on ajoute au milieu réactionnel un peu de soude (à raison de respectivement 0 g, 0,6 g et 2 g de soude par kg de poudre de zéolite échangée) pour compenser les protons et on maintient le mélange sous agitation pendant 15 minutes. On filtre et on lave avec environ 15 ml d'eau par gramme de zéolite. L'analyse chimique de la poudre non stabilisée par la soude en fin d'échange montre qu'environ 7 % des sites cationiques sont occupés par des protons, ce qui n'est pas surprenant dans la mesure où l'échange a été fait au moyen d'une solution légèrement acide.

Quelques grammes de poudre des zéolites échangées et éventuellement stabilisées sont ensuite séchés en étuve ventilée pendant 1 h à 80°C puis activés à 550°C pendant 1 heure dans le même type d'étuve ventilée. On mesure ensuite leur volume microporeux par adsorption de toluène sous une pression relative de 0,5 à 25°C. Les résultats sont réunis dans le tableau ci-dessous:

| | | | |
|---|---|---|---|
| Quantité de soude ajoutée par kg de zéolite échangée | 0 g | 0,6 g | 2 g |
| Volume microporeux (cm³/g) | 0,228 | 0,237 | 0,25 |

On voit que la stabilisation à la soude conduit à un volume microporeux supérieur et confère à la zéolite une meilleure résistance thermique (meilleure résistance à la calcination)

### Exemple 7

On effectue un échange d'une partie des cations échangeables Na⁺ et K⁺ de la zéolite LSX définie à l'exemple 1 par des cations Zn²⁺ par mélange à 80 °C pendant 3 heures de 1.200 g d'une suspension aqueuse contenant 200g de zéolite avec 90 ml d'une solution aqueuse de ZnCl₂ dont la concentration en zinc est 0,1 M ; le pH du mélange réactionnel étant égal à 7.

Dans une variante du procédé, on procède en fin d'échange à une stabilisation à la soude par ajout d'une solution concentrée de soude, à raison de 22,5 g de soude ajoutés par kg de zéolite échangée Zn.

Les opérations de lavage, séchage et activation ultérieures sont effectuées dans des conditions similaires à celles décrites dans les exemples précédents. On mesure alors le volume microporeux, le pourcentage des sites cationiques occupés par des protons ; les résultats sont réunis dans le tableau ci-dessous:

| | | |
|---|---|---|
| Quantité de soude ajoutée par kg de zéolite échangée (g) | 22,5 | 0 |
| Taux d'échange en zinc (%) | 14 | 13,7 |
| Volume microporeux (cm³/g) | 0,260 | 0,262 |
| Pourcentage des sites cationiques occupés par des protons | 2 | 5 |

On constate que le traitement de stabilisation à la soude a eu pour effet de :
* diminuer le nombre de protons dans le solide mais les volumes microporeux mesurés sont sensiblement identiques
* améliorer légèrement le rendement d'échange en zinc qui passe de 98% à pratiquement 100%, ce qui est particulièrement intéressant dans la mesure où l'on rejette moins de zinc.

La zéolite en poudre échangée au zinc et éventuellement stabilisée à la soude est ensuite agglomérée avec un liant (17 % de liant dans l'agglomérat) puis échangée au lithium dans les mêmes conditions que dans les exemples précédents : mise en contact à 100°C de 3,6 g de zéolite échangée au zinc agglomérée, éventuellement stabilisée à la soude, préparée précédemment et 30 ml d'une solution aqueuse de LiCl 4 M ; après contact, on filtre, lave et sèche les agglomérats. On constate que le taux d'échange en zinc de la zéolite non stabilisée à la soude est tombé à 8% après l'échange lithium, ce qui signifie qu'une bonne partie du zinc a été relargué (rétro-échangé) au cours de l'échange au lithium. On estime à 1,3 g de zinc par litre de solution à l'équilibre le relargage en question.

De façon inattendue, le taux d'échange en zinc de la zéolite stabilisée à la soude ne varie pas après l'échange lithium et en effet on constate qu'à l'équilibre, la teneur en zinc dans les eaux après échange lithium est très nettement inférieure à 50 ppm, signe que le relargage est négligeable.

## Revendications

1. Procédé de préparation de zéolites de type X ayant un rapport atomique Si/Al inférieur à 1,5 et de préférence compris entre 0,9 et 1,1 dont les cations échangeables comprennent rapportés en équivalents
* d'environ 50 à environ 95% d'ion lithium,
* d'environ 4 à environ 50% d'ions trivalents choisis parmi l'aluminium, le scandium, le gallium, le fer (III), le chrome (III), l'indium, l'yttrium, les lanthanides ou terres rares, seuls ou en mélange et/ou d'ions divalents choisis parmi le calcium, le strontium, le zinc, le cuivre, le chrome (II), le fer (II), le manganèse, le nickel, le cobalt, seuls ou en mélange,
* 0 à environ 15% d'ions résiduels choisis parmi le sodium, le potassium, l'ammonium, l'hydronium, seuls ou en mélange, **caractérisé en ce qu'**il comprend les étapes suivantes :
a) mise en suspension de la zéolite dans l'eau, puis
b) échange des cations échangeables de la zéolite en suspension avec un ou plusieurs ions di- et/ou trivalents par contact(s) simultané(s) et/ou successif(s) de ladite suspension avec une ou plusieurs solutions contenant des composés des ions di- et/ou trivalents dans un mélangeur rapide,
c) échange des cations échangeables de la zéolite issue de l'étape b) avec du lithium.

2. Procédé de préparation selon la revendication 1, **caractérisé en ce que** l'étape b) est mise en oeuvre dans un mélangeur statique.

3. Procédé de préparation selon la revendication 1 ou 2 de zéolites agglomérées avec un liant **caractérisé en ce qu'**il comprend, outre les étapes du procédé de la revendication 1 ou 2, une étape d'agglomération de la zéolite issue de l'étape b) avec un liant.

4. Procédé de préparation de zéolites agglomérées ou non selon l'une quelconque des revendications 1 à 3, **caractérisé en ce qu'**il comprend, outre les étapes du procédé des revendication 1 à 3, une étape d'échange des cations échangeables de la zéolite issue de l'étape a) et/ou de l'étape b) avec un cation monovalent, de préférence l'ion ammonium ou l'ion sodium.

5. Procédé de préparation de zéolites agglomérées ou non selon l'une qurelconque des revendications 1 à 4, **caractérisé en ce que** le ou les échanges cationiques de l'étape b) sont effectués en présence de composé(s) d'un ion monovalent, de préférence l'ion ammonium ou l'ion sodium.

6. Procédé de préparation de zéolites agglomérées ou non selon l'une qurelconque des revendications 1 à 5, **caractérisé en ce qu'**il comprend une étape de stabilisation à la soude juste après l'échange par des ions tri- et/ou divalents ou par des ions tri- et/ou divalents et des ions monovalents de l'étape b).

7. Procédé de préparation de zéolites agglomérées ou non selon l'une quelconque des revendications 1 à 6, **caractérisé en ce que** l'échange lithium (étape c)) est pratiqué de façon continue à contre-courant, de préférence la zéolite étant répartie dans au moins 2 récipients sous forme de lit fixe, préférentiellement au moins 3, agencés en série de manière interchangeable, la solution de composés de lithium étant acheminée à travers lesdits récipients agencés en série et la succession des récipients agencés en série, dénommée « carrousel », étant modifiée de manière cyclique à des intervalles de temps donnés, l'arrivée de la nouvelle solution étant transposée à chaque fois du 1^{er} récipient où se trouve la zéolite la plus échangée en lithium au récipient qui le suit dans la série ; lorsque le taux d'échange en lithium souhaité est atteint pour la zéolite du 1^{er} récipient, celui-ci est dissocié de la série de récipients du carrousel et la zéolite qui y est contenue est débarrassée de la solution de composés lithium par lavage puis déchargée et éventuellement remplacée par une nouvelle charge de zéolite à échanger.

8. Zéolites de type X ayant un rapport atomique Si/Al inférieur à 1,5 dont les cations échangeables comprennent rapportés en équivalents
* d'environ 50 à environ 95% d'ions lithium,
* d'environ 4 à environ 50% d'ions trivalents choisis parmi l'aluminium, le scandium, le gallium, le fer (III), le chrome (III), l'indium, l'yttrium, les lanthanides ou terres rares, seuls ou en mélange et/ou d'ions divalents choisis parmi le calcium, le strontium, le zinc, le cuivre, le chrome (II), le fer (II), le manganèse, le nickel, le cobalt, seuls ou en mélange,
* 0 à environ 15% d'ions résiduels choisis parmi le sodium, le potassium, l'ammonium, l'hydronium, seuls ou en mélange,
susceptibles d'être obtenues selon le procédé de préparation des revendications 1 à 7.

9. Zéolites selon la revendication 8 ayant un rapport atomique Si/Al compris entre 0,9 et 1,1.

10. Zéolites selon la revendication 8 ou 9 agglomérées avec un liant minéral inerte au sens de l'adsorption, ledit liant représentant de préférence de 5 à 30 parties en poids de l'aggloméré et susceptibles d'être obtenues selon le procédé de la revendication 3.

11. Zéolites selon la revendication 10 agglomérés avec un liant choisi parmi les argiles, les silices, les alumines et/ou les oxydes métalliques.

12. Utilisation des zéolites telles que définies dans l'une quelconque des revendications 8 à 11 pour séparer l'azote d'un mélange gazeux selon un procédé d'adsorption comprenant le passage dudit mélange gazeux dans au moins une zone d'adsorption contenant un adsorbant essentiellement constitué d'une zéolite telle que définie dans l'une quelconque des revendications 8 à 11.

13. Utilisation des zéolites telles que définies dans l'une quelconque des revendications 8 à 11 pour séparer l'azote d'un mélange gazeux selon un procédé d'adsorption cyclique comprenant le passage dudit mélange gazeux dans au moins une zone d'adsorption contenant un adsorbant essentiellement constitué d'une zéolite telle que définie dans l'une quelconque des revendications 8 à 11 et une étape de désorption de l'azote de la (les) zone(s) d'adsorption.

14. Utilisation selon la revendication 13 des zéolites telles que définies dans l'une quelconque des revendications 8 à 11 dans laquelle le procédé d'adsorption est de type PSA, VSA, et/ou TSA.

## Patentansprüche

1. Verfahren zur Herstellung von Zeolithen vom Typ X mit einem Si/Al-Atomverhältnis kleiner 1,5 und vorzugsweise zwischen 0,9 und 1,1, die als austauschbare Kationen auf Äquivalentbasis
* etwa 50 bis etwa 95% Lithiumionen,
* etwa 4 bis etwa 50% unter Aluminium, Scandium, Gallium, Eisen(III), Chrom (III), Indium, Yttrium und den Lanthaniden bzw. Seltenerdmetallen allein oder im Gemisch ausgewählte dreiwertige Ionen und/oder unter Calcium, Strontium, Zink, Kupfer, Chrom(II), Eisen(II), Mangan, Nickel und Cobalt allein oder im Gemisch ausgewählte zweiwertige Ionen und
* 0 bis etwa 15% unter Natrium, Kalium, Ammonium und Hydronium allein oder im Gemisch ausgewählte restliche Ionen
enthalten, **dadurch gekennzeichnet, daß** man:
a) den Zeolith in Wasser suspendiert,
b) die austauschbaren Kationen des suspendierten Zeoliths durch gleichzeitiges und/oder aufeinanderfolgendes Inberührungbringen der Suspension mit einer oder mehreren Lösungen, die Verbindungen zwei- und/oder dreiwertiger Ionen enthält, in einem Schnellmischer gegen ein oder mehrere zwei- und/oder dreiwertige Ionen austauscht und
c) die austauschbaren Kationen des aus Schritt b) erhaltenen Zeoliths gegen Lithium austauscht.

2. Herstellungsverfahren nach Anspruch 1, **dadurch gekennzeichnet, daß** man Schritt b) in einem statischen Mischer durchführt.

3. Verfahren nach Anspruch 1 oder 2 zur Herstellung von mit einem Bindemittel agglomerierten Zeolithen, **dadurch gekennzeichnet, daß** man zusätzlich zu den Schritten des Verfahrens nach Anspruch 1 oder 2 den aus Schritt b) erhaltenen Zeolith mit einem Bindemittel agglomeriert.

4. Verfahren zur Herstellung von gegebenenfalls agglomerierten Zeolithen nach einem der Ansprüche 1 bis 3, **dadurch gekennzeichnet, daß** man zusätzlich zu den Schritten des Verfahrens nach den Ansprüchen 1 bis 3 die austauschbaren Kationen des aus Schritt a) und/oder Schritt b) erhaltenen Zeoliths gegen ein einwertiges Kation, vorzugsweise das Ammonium- oder Natriumion, austauscht.

5. Verfahren zur Herstellung von gegebenenfalls agglomerierten Zeolithen nach einem der Ansprüche 1 bis 4, **dadurch gekennzeichnet, daß** man den Kationenaustausch bzw. die Kationenaustausche in Schritt b) in Gegenwart einer oder mehrerer Verbindungen eines einwertigen Ions, vorzugsweise des Ammonium- oder Natriumions, durchführt.

6. Verfahren zur Herstellung von gegebenenfalls agglomerierten Zeolithen nach einem der Ansprüche 1 bis 5, **dadurch gekennzeichnet, daß** man unmittelbar nach dem Austausch gegen dreiund/oder zweiwertige Ionen bzw. gegen dreiund/oder zweiwertige Ionen und einwertige Ionen in Schritt b) mit Natriumhydroxid stabilisiert.

7. Verfahren zur Herstellung von gegebenenfalls agglomerierten Zeolithen nach einem der Ansprüche 1 bis 6, **dadurch gekennzeichnet, daß** man den Lithiumaustausch (Schritt c)) in Gegenstromfahrweise kontinuierlich durchführt, wobei der Zeolith vorzugsweise auf mindestens 2 und vorzugsweise mindestens 3 austauschbar in Reihe geschaltete Behälter in Festbettform verteilt wird, die Lösung von Lithiumverbindungen durch die in Reihe geschalteten Behälter geleitet wird und die Reihenfolge der in Reihe geschalteten Behälter, die als "Karussel" bezeichnet wird, in gegebenen Zeitintervallen zyklisch verändert wird, wobei der Zulauf der frischen Lösung jeweils von dem ersten Behälter, in dem sich der am stärksten lithiumausgetauschte Zeolith befindet, auf den in der Reihe folgenden Behälter umgestellt wird, beim Erreichen des gewünschten Lithiumaustauschgrads für den Zeolith im ersten Behälter dieser von der Behälterreihe des Karussels abgekoppelt wird und der darin enthaltene Zeolith durch Waschen von der Lösung von Lithiumverbindungen befreit, dann ausgetragen und gegebenenfalls durch eine neue Charge von auszutauschendem Zeolith ersetzt wird.

8. Zeolithe vom Typ X mit einem Si/Al-Atomverhältnis kleiner 1,5, die als austauschbare Kationen auf Äquivalentbasis
* etwa 50 bis etwa 95% Lithiumionen,
* etwa 4 bis etwa 50% unter Aluminium, Scandium, Gallium, Eisen(III), Chrom(III), Indium, Yttrium und den Lanthaniden bzw. Seltenerdmetallen allein oder im Gemisch ausgewählte dreiwertige Ionen und/oder unter Calcium, Strontium, Zink, Kupfer, Chrom(II), Eisen (II), Mangan, Nickel und Cobalt allein oder im Gemisch ausgewählte zweiwertige Ionen und
* 0 bis etwa 15% unter Natrium, Kalium, Ammonium und Hydronium allein oder im Gemisch ausgewählte restliche Ionen enthalten und nach dem Herstellungsverfahren gemäß den Ansprüchen 1 bis 7 erhältlich sind.

9. Zeolithe nach Anspruch 8 mit einem Si/Al-Atomverhältnis zwischen 0,9 und 1,1.

10. Zeolithe nach Anspruch 8 oder 9, die mit einem im Adsorptionssinne inerten mineralischen Bindemittel agglomeriert sind, wobei das Bindemittel vorzugsweise 5 bis 30 Gewichtsteile des Agglomerats ausmacht, und nach dem Verfahren gemäß Anspruch 3 erhältlich sind.

11. Zeolithe nach Anspruch 10, die mit einem unter Tonen, Siliciumoxiden, Aluminiumoxiden und/oder Metalloxiden ausgewählten Bindemittel agglomeriert sind.

12. Verwendung der Zeolithe gemäß einem der Ansprüche 8 bis 11 zur Abtrennung von Stickstoff aus einem Gasgemisch nach einem Adsorptionsverfahren, bei dem man das Gasgemisch durch mindestens eine Adsorptionszone, die im wesentlichen aus einem Zeolith gemäß einem der Ansprüche 8 bis 11 besteht, leitet.

13. Verwendung der Zeolithe gemäß einem der Ansprüche 8 bis 11 zur Abtrennung von Stickstoff aus einem Gasgemisch nach einem cyclischen Adsorptionsverfahren, bei dem man das Gasgemisch durch mindestens eine Adsorptionszone, die im wesentlichen aus einem Zeolith gemäß einem der Ansprüche 8 bis 11 besteht, leitet und den Stickstoff aus der Adsorptionszone bzw. den Adsorptionszonen desorbiert.

14. Verwendung nach Anspruch 13 von Zeolithen gemäß einem der Ansprüche 8 bis 11, bei der das Adsorptionsverfahren vom PSA-, VSA- und/oder TSA-Typ ist.

## Claims

1. Process for the preparation of zeolites of X type having an Si/Al atomic ratio of less than 1.5 and preferably of between 0.9 and 1.1, the exchangeable cations of which comprise, referred to as equivalents,
* from approximately 50 to approximately 95% of lithium ions,
* from approximately 4 to approximately 50% of trivalent ions chosen from aluminium, scandium, gallium, iron(III), chromium(III), indium, yttrium, lanthanides or rare earth metals, alone or as a mixture, and/or of divalent ions chosen from calcium, strontium, zinc, copper, chromium(II), iron(II), manganese, nickel or cobalt, alone or as a mixture,
* 0 to approximately 15% of residual ions chosen from sodium, potassium, ammonium or hydronium, alone or as a mixture, **characterized in that** it comprises the following stages:
a) suspension of the zeolite in water, then
b) exchange of the exchangeable cations of the suspended zeolite with one or more di- and/or trivalent ions by simultaneous and/or successive contact(s) in a rapid mixer of the said suspension with one or more solutions comprising compounds of the di- and/or trivalent ions,
c) exchange of the exchangeable cations of the zeolite resulting from stage b) with lithium.

2. Preparation process according to Claim 1, **characterized in that** stage b) is carried out in a static mixer.

3. Preparation process of zeolites agglomerated with a binder according to Claim 1 or 2, **characterized in that** it comprises, in addition to the stages of the process of Claim 1 or 2, a stage of agglomeration with a binder of the zeolite resulting from stage b).

4. Process for the preparation of agglomerated or nonagglomerated zeolites according to any one of Claims 1 to 3, **characterized in that** it comprises, in addition to the stages of the process of Claims 1 to 3, a stage of exchange of the exchangeable cations of the zeolite resulting from stage a) and/or from stage b) with a monovalent cation, preferably the ammonium ion or the sodium ion.

5. Process for the preparation of agglomerated or nonagglomerated zeolites according to any one of Claims 1 to 4, **characterized in that** the cationic exchange or exchanges of stage b) are carried out in the presence of compound(s) of a monovalent ion, preferably the ammonium ion or the sodium ion.

6. Process for the preparation of agglomerated or nonagglomerated zeolites according to any one of Claims 1 to 5, **characterized in that** it comprises a stage of stabilization with sodium hydroxide immediately after the exchange with tri- and/or divalent ions or with tri- and/or divalent ions and monovalent ions of stage b).

7. Process for the preparation of agglomerated or nonagglomerated zeolites according to any one of Claims 1 to 6, **characterized in that** the lithium exchange (stage c)) is carried out countercurrentwise and continuously, preferably the zeolite being distributed in at least 2, preferably at least 3, receptacles in the stationary bed form which are arranged in series in an interchangeable manner, the solution of lithium compounds being conveyed through the said receptacles arranged in series and the sequence of the receptacles arranged in series, known as a "carousel", being modified cyclically at given time intervals, the inlet of the fresh solution being moved on each occasion from the 1st receptacle, in which is found the zeolite which has been exchanged with lithium to the greatest extent, to the following receptacle in the series; when the desired degree of exchange of lithium is reached for the zeolite in the 1st receptacle, the latter is taken out of the series of receptacles of the carousel and the zeolite which is present therein is freed from the solution of lithium compounds by washing, then discharged and optionally replaced by a fresh charge of zeolite to be exchanged.

8. Zeolites of type X having an Si/Al atomic ratio of less than 1.5, the exchangeable cations of which comprise, referred to as equivalents:
* from approximately 50 to approximately 95% of lithium ions,
* from approximately 4 to approximately 50% of trivalent ions chosen from aluminium, scandium, gallium, iron(III), chromium(III), indium, yttrium, lanthanides or rare earth metals, alone or as a mixture, and/or of divalent ions chosen from calcium, strontium, zinc, copper, chromium(II), iron(II), manganese, nickel or cobalt, alone or as a mixture,
* 0 to approximately 15% of residual ions chosen from sodium, potassium, ammonium or hydronium, alone or as a mixture,
capable of being obtained according to the preparation process of Claims 1 to 7.

9. Zeolites according to Claim 8 having an Si/Al atomic ratio of between 0.9 and 1.1.

10. Zeolites according to Claim 8 or 9 agglomerated with an inorganic binder which is inert in the sense of the adsorption, the said binder preferably representing from 5 to 30 parts by weight of the agglomerate, which zeolites are capable of being obtained according to the process of Claim 3.

11. Zeolites according to Claim 10 agglomerated with a binder chosen from clays, silicas, aluminas and/or metal oxides.

12. Use of the zeolites as defined in any one of Claims 8 to 11 in separating the nitrogen from a gas mixture according to an adsorption process comprising passing the said gas mixture into at least one adsorption region comprising an adsorbent composed essentially of a zeolite as defined in any one of Claims 8 to 11.

13. Use of the zeolites as defined in any one of Claims 8 to 11 in separating the nitrogen from a gas mixture according to an adsorption process, in which the adsorption process is cyclic and comprises, in addition to the adsorption stage of Claim 12, a stage of desorption of the nitrogen from the adsorption region(s).

14. Use according to Claim 13 of the zeolites as defined in any one of Claims 8 to 11, in which the adsorption process is of PSA, VSA and/or TSA type.
